# EUROPÄISCHE PATENTSCHRIFT

(11) **EP 0 786 770 B1**
(45) Veröffentlichungstag und Bekanntmachung des Hinweises auf die Patenterteilung: **25.06.2003**
(21) Anmeldenummer: 97200158.0
(22) Anmeldetag: 20.01.1997
(51) Int. Cl.: G11B 15/44, G11B 15/29

(54) **Reversebandlaufwerk mit einer Umschaltvorrichtung**
Reverse tape drive with a switching device
Dispositif d'entraînement de bande réversible avec un dispositif de commutation

(30) Priorität: 26.01.1996 DE 19602743
(43) Veröffentlichungstag der Anmeldung: 30.07.1997
(73) Patentinhaber: Philips Intellectual Property & Standards GmbH, 20099 Hamburg (DE); Koninklijke Philips Electronics N.V., 5621 BA Eindhoven (NL)
(72) Erfinder: Kunze, Norbert, Röntgenstrasse 24, 22335 Hamburg (DE); Koch, Stefan, Röntgenstrasse 24, 22335 Hamburg (DE)
(74) Vertreter: von Laue, Hanns-Ulrich, Dipl.-Ing.

(56) Entgegenhaltungen:
- EP-A- 0 290 079
- DE-A- 4 230 126
- US-A- 3 810 237

## Beschreibung

Die Erfindung bezieht sich auf eine Umschaltvorrichtung an einem Reverselaufwerk für ein Magnetbandkassettengerät, wobei eine erste, an einem ersten Druckrollenhebel gelagerte Druckrolle für eine erste Bandlaufrichtung in einer ersten Betriebsposition der Umschaltvorrichtung gegen eine erste Tonwelle und eine zweite, an einem zweiten Druckrollenhebel gelagerte Druckrolle für eine zweite Bandlaufrichtung in einer zweiten Betriebsposition der Umschaltvorrichtung gegen eine zweite Tonwelle drückbar ist und wobei ein Magnetkopf auf einem an einer Chassisplatte gelagertem Trägerelement anordbar ist und durch Bewegung des Trägerelementes in verschiedene Positionen bezüglich einer Durchzugsbahn eines Magnetbandes bewegbar ist.

Eine derartige Umschaltvorrichtung ist aus der EP 367 371 A2 bekannt. Diese bekannte Vorrichtung weist ein Trägerelement auf, das an der Chassisplatte in einer Richtung senkrecht zu der Durchzugsbahn des Magnetbandes verschiebbar angelagert ist. An dem Trägerelement ist eine Reversierplatte in einer Richtung parallel zu der Durchzugsbahn des Magnetbandes verschiebbar angelagert. Diese Reversierplatte ist in einer Vorzugsrichtung federbelastet. Das Trägerelement kann mittels eines ersten Steuernockens und die Reverseplatte mittels eines zweiten Steuernockens verschoben werden. Für die erste Bandlaufrichtung wirkt die Reverseplatte auf den ersten Druckrollenhebel ein und drückt die erste Druckrolle gegen die erste Tonwelle. Für die zweite Bandlaufrichtung wirkt die Reverseplatte auf den zweiten Druckrollenhebel ein und drückt die zweite Druckrolle gegen die zweite Tonwelle. Dabei muß von der Reverseplatte jeweils zunächst eine Kraft aufgebracht werden, um Druckrolle und Druckrollenhebel entgegen einer Federkraft auf . die Tonwelle zuzubewegen und nachfolgend noch die erforderliche Andruckkraft der Druckrolle gegen die Tonwelle. Die Reverseplatte bestimmt im Spielbetrieb nur jeweils die Position von einer der beiden Druckrollen, während die andere Druckrolle mittels einer Federkraft von der ihr zugeordneten Tonwelle weggedrückt wird. Eine derartige Konstrukstruktion ist sehr kostenaufwendig, kompliziert und empfindlich. Bei der Verschiebebewegung zwischen Trägerelement und Chassisplatte bzw. zwischen Reversierplatte und Trägerelement kann es sehr leicht zu einem Verklemmen bzw. Verhaken kommen. Zudem ist eine derartige Konstruktion nur bei Trägerelementen einsetzbar, die senkrecht zu der Durchzugsbahn des Magnetbandes bewegt werden. So ist es beispielsweise nicht möglich, eine derartige Konstruktion bei Trägerelementen einzusetzen, welche um einen seitlich an der Chassisplatte gelegenenen Drehpunkt drehbar gelagert sind. Ein weiterer Nachteil dieser bekannten Konstruktion ist, daß für die Verschiebung des Trägerelementes und die Verschiebung der Reverseplatte jeweils zwei getrennte Antriebsnocken erforderlich sind.

Eine derartige Umschaltvorrichtung ist auch aus der US-A-3810237 bekannt. An einer senkrecht zur Bandlaufrichtung verfahrbaren Trägerplatte ist ein Magnetkopf angebracht, der durch die Bewegung der Trägerplatte zwischen einer Betriebs- und Ruheposition verfahren werden kann. An der Trägerplatte ist weiterhin ein T-förmiges Bauteil drehbar angeordnet, dessen beide Schenkel als Druckrollenhebel funktionieren und dessen Mittelteil als Stellhebel zum Verfahren der an den Schenkeln angebrachten Druckrollen gegen eine entsprechende Antriebswelle je nach Bandlaufrichtung eingesetzt wird.

Es ist Aufgabe der vorliegenden Erfindung, eine Vorrichtung der eingangs genannten Art zu schaffen, die einfach, kostengünstig und zuverlässig ist, und bei der die von der Umschalteinrichtung zur Betätigung der Druckrollen aufzubringende Kraft möglichst gering ist.

Diese Aufgabe ist erfindungsgemäß gelöst durch eine Umschaltvorrichtung an einem Reverselaufwerk für ein Magnetbandkassettengerät, wobei eine erste, an einem ersten Druckrollenhebel gelagerte Druckrolle für eine erste Bandlaufrichtung in einer ersten Betriebsposition der Umschaltvorrichtung gegen eine erste Tonwelle und eine zweite, an einem zweiten Druckrollenhebel gelagerte Druckrolle für eine zweite Bandlaufrichtung in einer zweiten Betriebsposition der Umschaltvorrichtung gegen eine zweite Tonwelle drückbar ist, wobei der erste und der zweite Druckrollenhebel um eine gemeinsame Drehachse oder jeweils um eine Drehachse drehbar an einer Chassisplatte gelagert sind, wobei ein Magnetkopf auf einem an einer Chassisplatte gelagertem Trägerelement anordbar ist und durch Bewegung des Trägerelementes in verschiedene Positionen bezüglich einer Durchzugsbahn eines Magnetbandes bewegbar ist, wobei ein auf dem Trägerelement drehbar und/oder verschiebbar gelagerter Stellhebel vorgesehen ist, der mit dem ersten und dem zweiten Druckrollenhebel gekoppelt ist, wobei der Stellhebel beim Umschalten der Bandlaufrichtung von der einen Betriebsposition in die andere Betriebsposition überführt wird, wobei die Druckrollenhebel beim Umschalten der Bandlaufrichtung mittels des Stellhebels von der einen Betriebsposition in die andere Betriebsposition überführt werden, wobei in der ersten und der zweiten Bandlaufrichtung die Position beider Druckrollenhebel von der Position des Stellhebels bestimmt ist.

Durch die drehbar und/oder verschiebbare Lagerung des Stellhebels an dem Trägerelement wird es möglich, diese Umschalteinrichtung bei Trägerelemenen einzusetzen, die verschiedenartigst an der Chassisplatte gelagert und gegenüber der Chassisplatte bewegbar sind. Insbesondere ist es möglich, eine derartige Umschalteinrichtung bei Trägerelementen einzusetzen, deren Trägerelement um eine seitlich an der Chassisplatte angeordnete Drehachse gelagert ist. Eine drehbare Lagerung des Stellhebels auf dem Trägerelement ermöglicht ein funktionssicheres und zuverlässiges Umschalten, ohne daß die Gefahr eines Verklemmens oder Verkantens auftritt. Die direkte Kopplung des Stellhebels mit dem ersten und dem zweiten Druckrollenhebel ermöglicht es, die beiden Druckrollenhebel direkt durch die Bewegung des Stellhebels zu positionieren. Wird der Stellhebel beim Umschalten der Bandlaufrichtung von der einen Betriebsposition in die andere Betriebsposition überführt, so werden dadurch gleichzeitig die Druckrollenhebel mittels des Stellhebels von der einen Betriebsposition in die andere Betriebsposition überführt. Das Überführen des Stellhebels von der einen Betriebsposition in die andere Betriebsposition ist z.B. mittels eines schwenkbaren Getriebes möglich, welches beim Umschalten der Bandlaufrichtung auf den Stellhebel einwirkt. Es ist ebenfalls möglich, den Stellhebel beim Umschalten der Bandlaufrichtung mittels eines von einem Motor angetriebenen Antriebsnockens von der einen Betriebsposition in die andere Betriebsposition zu überführen. Durch die Kopplung des Stellhebels mit dem ersten und dem zweiten Druckrollenhebel wird in der ersten bzw. der zweiten Bandlaufrichtung sowohl die Position des Druckrollenhebels, der gegen die ihm zugeordnete Tonwelle gedrückt wird, als auch die Position des Druckrollenhebels, der von der Tonwelle abgerückt ist, von der Position des Stellhebels bestimmt. Daher ist es nicht erforderlich, Abrückmittel, z.B. vorgespannte Federn, vorzusehen, die ein Abrücken der Druckrolle von der ihr zugeordneten Tonwelle gewährleisten. Daher können die Druckrollen mittels des Stellhebels mit sehr kleinem Kraftaufwand positioniert werden. Die Kopplung der Druckrollenhebel mit dem Stellhebel ermöglicht es ferner, eine Bewegung des Trägerelementes, die eine entsprechende Bewegung des Stellhebels hervorruft, in eine Bewegung der Druckrollenhebel zu übertragen. Dadurch kann z.B. bei der Bewegung des Trägerelementes von einer Spielposition in eine Position für einen Musiksuchlaufbetrieb das hierfür notwendige Abrücken der jeweiligen Druckrolle von der ihr zugeordneten Tonwelle mittels des Stellhebels durchgeführt werden. Die gesamte Konstruktion ist einfach, kostengünstig und zuverlässig.

Eine vorteilhafte Ausgestaltung der Erfindung ist dadurch gekennzeichnet, daß die Druckrollen jeweils in einer Nut der Druckrollenhebel verschiebbar gelagert sind und daß die Druckrollen und die Druckrollenhebel jeweils mittels einer Feder gegeneinander verspannt sind.

Der Vorteil dieser Konstruktion besteht darin, daß die einzelnen Federn die Achsen der Druckrollen so in Richtung auf die Tonwellen ausrichten, daß die Tonwellenachse und die Druckrollenachse senkrecht zur Bandlaufrichtung im wesentlichen parallel verlaufen, und zwar ohne zusätzliche Hilfsmittel.

Die beiden Einheiten aus Druckrolle, Druckrollenhebel und Feder bilden jeweils ein in sich kraftgeschlossenes System, das im wesentlichen nur dann eine Kraft auf die Umschaltvorrichtung bzw. den Stellhebel ausübt, wenn es gegen die zugeordnete Tonwelle gedrückt wird. Die nicht in Berührung mit der Tonwelle stehende Einheit übt näherungsweise keine Kraft auf die Umschaltvorrichtung bzw. den Stellhebel aus.

Die Feder kann vorzugsweise gabelförmig ausgebildet sein, wobei die zwei voneinander unabhängigen, aber gleichgroßen Federkräfte oberhalb bzw. unterhalb der Druckrolle an der Druckrollenachse angreifen.

Eine weitere vorteilhafte Ausgestaltung der Erfindung ist dadurch gekennzeichnet, daß der erste Druckrollenhebel um eine erste Drehachse und der zweite Druckrollenhebel um eine zweite Drehachse drehbar an der Chassisplatte gelagert ist, wobei die erste und die zweite Drehachse zwischen denjenigen Senkrechten angeordnet sind, die sich von der ersten und der zweiten Tonwelle senkrecht zu der Verbindungslinie der Tonwellen erstrecken.

Liegen die erste und die zweite Drehachse der Druckrollenhebel zwischen den beiden Druckrollen, so ist die resultierende Kraft, die von der gegen eine Tonwelle drückenden Druckrolle auf den jeweiligen Druckrollenhebel wirkt, von der Drehachse des jeweiligen Druckrollenhebels weg gerichtet. Dadurch entsteht ein Ausrichteffekt, infolge desssen sich der jeweilige Druckrollenhebel selbständig ausrichtet (Windfahneneffekt).

Eine weitere vorteilhafte Ausgestaltung der Erfindung ist dadurch gekennzeichnet, daß der erste und der zweite Druckrollenhebel um eine gemeinsame Drehachse drehbar an der Chassisplatte gelagert sind, wobei die gemeinsame Drehachse im wesentlichen auf der Mittelsenkrechten der Verbindungslinie der ersten und der zweiten Tonwelle angeordnet ist. Dies spart Bauteile. .

Eine derartige Lagerung der Druckrollenhebel hat weiterhin den Vorteil, daß der Hebelarm zwischen der Drehachse der Druckrollenhebel und den Druckrollen maximal groß wird.

Zudem kommt es auch bei dieser Ausgestaltung der Erfindung zu einer selbständigen Ausrichtung der Druckrollenhebel infolge des Windfahneneffektes.

Eine weitere vorteilhafte Ausgestaltung der Erfindung ist dadurch gekennzeichnet, daß an dem ersten und zweiten Druckrollenhebel je ein Führungselement angeordnet ist, das in je eine Führungsöffnung des Stellhebels eingreift.

Eine derartige Konstruktion ist besonders einfach, kostengünstig und zuverlässig zu realisieren und kann vorzugsweise dadurch realisiert werden, daß die Führungselemente als Nocken und die Führungsöffnungen als Langlöcher ausgebildet sind.

Eine weitere vorteilhafte Ausgestaltung der Erfindung ist dadurch gekennzeichnet, daß an dem Stellhebel Anschlagflächen vorgesehen sind, die beim Umschalten der Bandlaufrichtung zentrisch in Höhe der Druckrolle gegen an den Druckrollenhebeln angeordnete Andruckelemente drückbar sind.

Dadurch wird vermieden, daß die von der Druckrolle auf den Mechanismus ausgehenden Kräfte zu einem Verkippen senkrecht zur Achse des Druckrollenhebels führen.

Eine weitere vorteilhafte Ausgestaltung der Erfindung ist dadurch gekennzeichnet, daß der Stellhebel drehbar auf dem Trägerelement gelagert ist.

Eine drehbare Lagerung des Stellhebels auf dem Trägerelement ist besonders einfach und zuverlässig.

Eine weitere vorteilhafte Ausgestaltung der Erfindung ist dadurch gekennzeichnet, daß die Position des Stellhebels in der ersten und der zweiten Betriebsposition des Umschaltmechanismus durch an der Chassisplatte angeordnete Referenzelemente bestimmt ist.

Eine derartige Vorrichtung ermöglicht eine sehr hohe Positionsgenauigkeit des Stellhebels und damit auch der Druckrollenhebel und der Druckrollen.

Eine weitere vorteilhafte Ausgestaltung der Erfindung ist dadurch gekennzeichnet, daß das Trägerelement und damit der an diesem angelagerte Stellhebel beim Umschalten der Bandlaufrichtung zunächst von der Durchzugsbahn des Magnetbandes wegbewegt werden, daß danach der Stellhebel und die Druckrollenhebel verschwenkt werden und daß dann Trägerelement und Stellhebel auf die Durchzugsbahn des Magnetbandes zubewegt werden.

Eine weitere vorteilhafte Ausgestaltung der Erfindung ist dadurch gekennzeichnet, daß die Umschaltvorrichtung ein zwischen zwei Wickelrädern in einem Schwenkbereich schwenkbares Getriebe aufweist, mittels dessen in der ersten Betriebsposition ein erstes Wickelrad und in der zweiten Betriebsposition ein zweites Wickelrad antreibbar ist, daß der Stellhebel eine Verzahnung aufweist, die mit einem Schwenkrad des schwenkbaren Getriebes in Eingriff bringbar ist, daß die Stellhebelverzahnung und das Schwenkrad in einem mittleren Bereich des Schwenkbereiches des Getriebes in Eingriff und in einem Anfangs- und einem Endbereich des Schwenkbereiches außer Eingriff sind, so daß das verschwenkende Getriebe mittels des Schwenkrades nur in dem mittleren Bereich eine Kraft auf den Stellhebel ausübt.

Eine weitere vorteilhafte Ausgestaltung der Erfindung ist dadurch gekennzeichnet, daß das Schwenkrad an einem Schwenkhebel angeordnet ist, der mittels einer von einer Reibkupplung übertragbaren Reibkraft mit einem mit dem Schwenkrad kämmenden Zwischenrad gekoppelt ist,
daß der Schwenkhebel in dem Anfangs- und Endbereich des Schwenkbereiches mittels der von der Reibkupplung übertragenen Reibkraft verschwenkt wird,
daß ein drehbar gelagerter Ankerhebel vorgesehen ist, dessen Drehbewegung von der Bewegung des Stellhebels gesteuert wird, daß der verschwenkende Schwenkhebel in dem mittleren Bereich des Schwenkbereiches gegen eine Anschlagkante des Ankerhebels drückt, so daß nachfolgend infolge der Abstützung des Schwenkhebels an der Anschlagkante des Ankerhebels Verzahnungskräfte mittels Zwischenrad und Schwenkrad auf die Verzahnung des Stellhebels übertragen werden, so daß dieser gedreht wird.

In einem Anfangs- und Endbereich des Schwenkbereiches wird der Schwenkhebel z.B. mittels der von der Reibkupplung übertragenen Reibkraft verschwenkt. Im mittleren Bereich des Schwenkbereiches drückt der verschwenkende Schwenkhebel gegen eine Anschlagkante des Ankerhebels. In diesem mittleren Bereich des Schwenkbereiches ist die Verzahnung des Stellhebels mit der Verzahnung des Schwenkrades in Eingriff. Der Schwenkhebel kann sich nachfolgend an der Anschlagkante des Ankerhebels abstützen, und es können mittels Zwischenrad und Schwenkrad Verzahnungskräfte auf die Verzahnung des Stellhebels übertragen werden. Diese mittels der Verzahnungskräfte auf den Stellhebel übertragbaren Kräfte sind deutlich größer als die mittels der Reibkupplung übertragbaren Reibkräfte. Daher können in dem mittleren Bereich des Schwenkbereiches mittels des Stellhebels auch kraftaufwendige Gerätefunktionen betätigt werden, z.B. das Umschalten der Druckrollenhebel. Mit einer derartigen Vorrichtung kann ein großer Stellbereich des Stellhebels realisiert werden.

Bei einer weiteren vorteilhaften Ausgestaltung der Erfindung ist vorgesehen, daß der Ankerhebel drehbar an der Chassisplatte gelagert ist.

Die Steuerung der Drehbewegung des Ankerhebels mittels der Bewegung des Stellhebels kann vorzugsweise dadurch realisiert werden, daß der Ankerhebel ein Leitelement aufweist, das in eine Leitöffnung des Stellhebels eingreift, oder daß der Stellhebel ein Leitelement aufweist, das in eine Leitöffnung des Ankerhebels eingreift. Eine derartige Konstruktion ist einfach, kostengünstig und zuverlässig zu realisieren.

In weiterer vorteilhafter Ausgestaltung der Erfindung ist vorgesehen, daß die Leitöffnung des Stellhebels als Langloch mit zwei verschieden breiten Bereichen ausgebildet ist, wobei in einem ersten, schmalen Bereich die Breite des Langloches im wesentlichen der Breite des Leitelementes entspricht und in einem zweiten, breiten Bereich die Breite des Langloches größer als die Breite des Leitelementes ist.

Die Ausbildung eines Langloches ermöglicht es, den Stellhebel gegenüber dem Ankerhebel zu verschieben. Befindet sich das Leitelement in dem schmalen Bereich des Langloches, so wird eine Verschwenkbewegung des Stellhebels in eine Verschwenkbewegung des Ankerhebels umgewandelt. Befindet sich das Leitelement in dem breiten Bereich des Langloches, so kann der Stellhebel innerhalb dieses breiten Bereiches verschwenken, ohne auf den Ankerhebel einzuwirken.

Vorzugsweise kann eine Umschalteinrichtung gemäß der Erfindung in einem Laufwerk bzw. in einem Magnetbandkassettengerät mit einem Laufwerk eingesetzt werden.

Eine Ausführungsform der Erfindung wird nachfolgend anhand der Zeichnung in den Fig. 1 bis 6 näher erläutert. Es zeigen:
Fig. 1 eine Draufsicht auf Teile eines Reverselaufwerkes eines Magnetbandkassettengerätes mit einer Umschaltvorrichtung für an Druckrollenhebeln gelagerte und gegen Tonwellen drückbare Druckrollen sowie mit einem zwischen zwei Wickelrädern schwenkbaren Getriebe in einer ersten Bandlaufrichtung (Play REV),
Fig. 2 eine Draufsicht auf Teile des Reverselaufwerkes, wobei sich das Laufwerk während des Umschaltens von der ersten Bandlaufrichtung (Play REV) in eine zweite Bandlaufrichtung (Play NOR) in einer ersten Zwischenstellung befindet, in der die Schwenkbewegung eines Schwenkhebels von einem Ankerhebel gebremst wird,
Fig. 3 eine Draufsicht auf Teile des Reverselaufwerkes, wobei sich das Laufwerk während des Umschaltens zwischen der ersten Bandlaufrichtung (Play REV) und der zweiten Bandlaufrichtung (Play NOR) in einer zweiten Zwischenstellung befindet, in der der Ankerhebel den Schwenkhebel gerade freigibt,
Fig. 4 eine Draufsicht auf Teile des Reverselaufwerkes in der zweiten Bandlaufrichtung (Play NOR).
Fig. 5 eine Draufsicht auf Teile des Reverselaufwerkes, wobei sich das Laufwerk in einer ersten Schnellspulstellung (Fast REV) befindet
Fig.6 eine perspektivische Ansicht auf eine bevorzugte Ausgestaltung eines Stellhebels und eines Druckrollenhebels

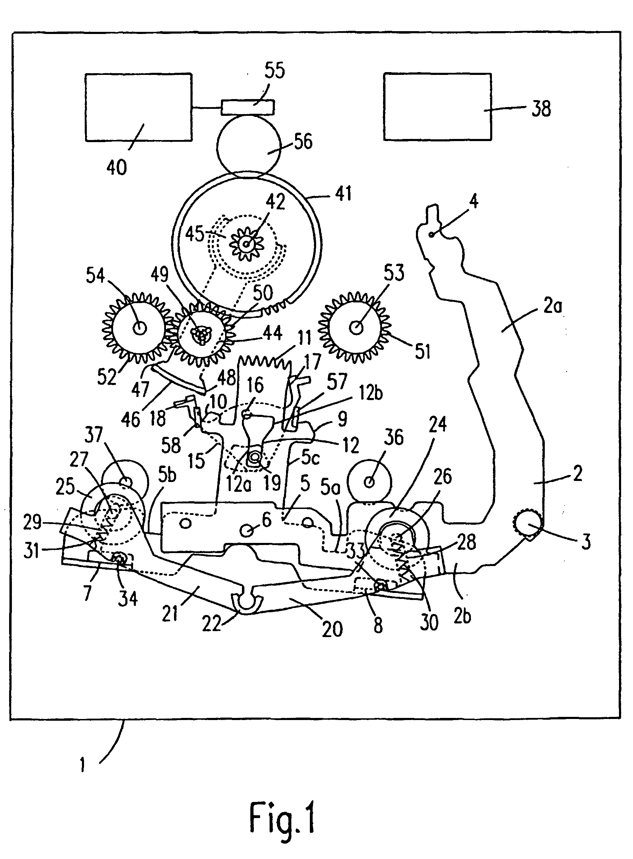

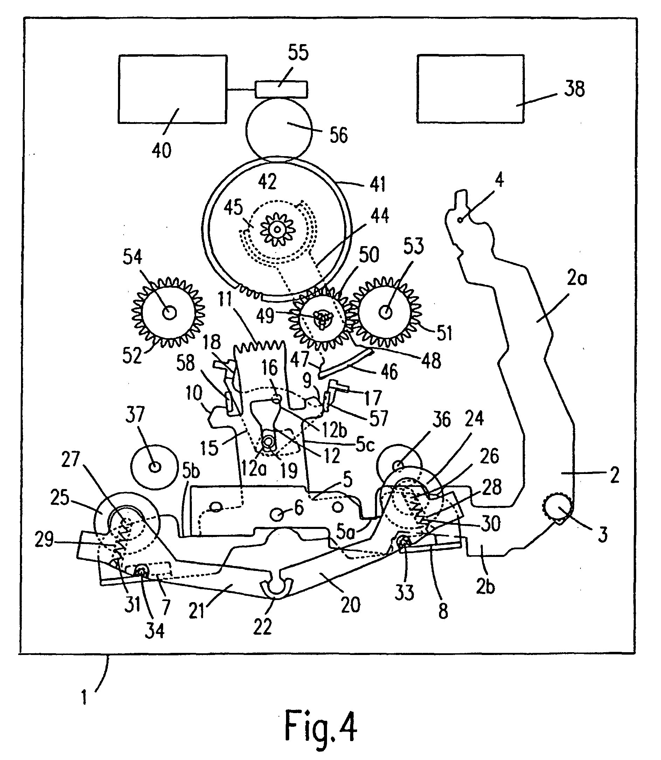

Die Fig. 1, 2, 3, 4 und 5 zeigen in schematischer Darstellung eine Draufsicht auf Teile eines Reverselaufwerkes in verschiedenen Betriebspositionen. In Fig. 1 is die Betriebsposition für eine erste Bandlaufrichtung (Play REV) dargestellt. Das in Fig. 1 gezeigte erfindungsgemäße Laufwerk weist eine als Gestell wirkende Chassisplatte 1 auf, an der ein Trägerelement 2 um eine Achse 3 drehbar gelagert ist. Das Trägerelement 2 weist einen Schenkel 2a und einen Schenkel 2b auf. An dem Schenkel 2a des Trägerelementes 2 ist ein Führungsstift 4 angeordnet. Dieser Führungsstift 4 greift in eine nicht dargestellte Steuerkontur einer nicht dargestellten Steuerscheibe ein. Diese nicht dargestellte Steuerscheibe übt die notwendigen Kräfte für das Verdrehen des Trägerelementes 2 um die Drehachse 3 auf den Führungsstift 4 aus. An dem Trägerelement 2 ist eine nicht dargestellte Magnetkopfbandführungseinheit angelagert. Durch ein Verdrehen des Trägerelementes 2 um die Drehachse 3 ist es möglich, die nicht dargestellte Magnetkopfbandführungseinheit in Richtung auf ein nicht dargestelltes Magnetband einer Magnetbandkassette hin- und zurückzufahren. An dem Trägerelement 2 ist um eine Drehachse 6 ein Stellhebel 5 drehbar gelagert. Der Stellhebel 5 ist T-förmig ausgebildet und weist zwei Querschenkel 5a und 5b sowie einen Mittelschenkel 5c auf. Die Querschenkel 5a und 5b des Stellhebels 5 weisen jeweils ein Langloch 7 bzw. 8 auf. Der Mittelschenkel 5c des Stellhebels 5 weist an der einen Seite einen Ansatz 9 und gegenüberliegend auf der anderen Seite einen Ansatz 10 auf. Die Stirnseite des Mittelschenkels 5c ist als Stellhebelverzahnung 11 ausgebildet. Der Mittelschenkel 5c des Stellhebels 5 weist als Leitöffnung eine Stellhebelnut 12 auf, die als Längsnut ausgebildet ist und einen schmalen Bereich 12a und einen breiten Bereich 12b aufweist.

An der Chassisplatte 1 ist um eine Drehachse 16 ein Ankerhebel 15 drehbar gelagert. Der Ankerhebel 15 weist zwei Ansätze 17 und 18 sowie als Leitelement einen Ankerhebelzapfen 19 auf, der in die Stellhebelnut 12 des Stellhebels 5 eingreift.

An der Chassisplatte 1 sind ein erster Druckrollenhebel 20 und ein zweiter Druckrollenhebel 21 drehbar um eine gemeinsame Drehachse 22 gelagert. Es ist auch möglich, die Druckrollenhebel 20 und 21 um örtlich voneinander entfernte Drehachsen zu lagern. An dem freien Ende des ersten Druckrollenhebels 20 ist eine erste Druckrolle 24 angelagert, an dem freien Ende des zweiten Druckrollenhebels 21 ist eine zweite Druckrolle 25 gelagert. Die erste Druckrolle 24 weist einen ersten Mittelstift 26 und die zweite Druckrolle 25 einen zweiten Mittelstift 27 auf. Der erste Mittelstift 26 ist in einer Nut 28 des ersten Druckrollenhebels 20 verschiebbar gelagert und mittels einer schematisch dargestellten Feder 30 gegenüber dem ersten Druckrollenhebel 20 verspannt. Der zweite Mittelstift 27 ist in einer Nut 29 des zweiten Druckrollenhebels 21 verschiebbar gelagert und mittels einer Feder 31 gegenüber dem zweiten Druckrollenhebel 21 verspannt. Der erste Druckrollenhebel 20 weist einen Nocken 33 auf, der in das Langloch 8 des Stellhebels 5 eingreift. Der zweite Druckrollenhebel 21 weist einen Nocken 34 auf, der in das Langloch 7 des Stellhebels 5 eingreift.

An der Chassisplatte 1 sind zwei Tonwellen 36 und 37 angelagert, welche mit nicht dargestellten Schwungscheiben verbunden sind. Für den Antrieb der Tonwellen 36 und 37 ist ein Tonwellenmotor 38 vorgesehen, der in zwei Richtungen antreibbar ist. Der Tonwellenmotor 38 treibt die Tonwellen 36 und 37 mittels einer nicht dargestellten Peese an, welche in nicht dargestellter Weise um die nicht dargestellten Schwungscheiben gewickelt ist.

Neben dem Tonwellenmotor 38 ist ein in zwei Richtung antreibbarer Servomotor 40 vorgesehen, der mittels einer Schneckenwelle 55 und eines Untersetzungszahnrades 56 ein an der Chassisplatte 1 angelagertes Zwischenrad 41 um die Drehachse 42 in zwei Richtungen antreiben kann. Um die Drehachse 42 ist neben dem Zwischenrad 41 ein Schwenkhebel 44 drehbar gelagert. Das Zwischenrad 41 und der Schwenkhebel 44 sind über eine Reibkupplung 45 miteinander gekoppelt. Der Schwenkhebel 44 weist eine Stirnseite 46 mit zwei seitlichen Kanten 47 und 48 auf. Ferner ist an dem Schwenkhebel 44 ein Schwenkhebelzapfen 49 angeordnet, um den ein Schwenkrad 50 drehbar gelagert ist. Das Schwenkrad 50 kann durch ein Verschwenken des Schwenkhebels 44 mit einem ersten Wickelrad 51 und einem zweiten Wickelrad 52 wahlweise in Eingriff gebracht werden. Das erste Wickelrad 51 ist um eine Drehachse 53 und das zweite Wickelrad 52 um eine Drehachse 54 drehbar an der Chassisplatte 1 gelagert. Die Wickelräder 51 und 52 können in nicht dargestellte Wickelöffnungen einer nicht dargestellten Magnetbandkassette eingreifen. An der Chassisplatte 1 sind zwei Chassisanschläge 57 und 58 angeordnet, gegen welche die Ansätze 9 und 10 des Stellhebels 5 drückbar sind.

In der in Fig. 1 dargestellten Betriebsposition (Play REV) treibt der Servomotor 40 mittels der Schneckenwelle 55, des Untersetzungszahnrades 56, des Zwischenrades 41 und des Schwenkrades 50 das zweite Wickelrad 52 an. Gleichzeitig treibt der Tonwellenmotor 38 über die nicht dargestellte Peese die nicht dargestellten Schwungscheiben der Tonwellen 36 und 37 an. Dadurch wird das nicht dargestellte Magnetband von der Tonwelle 37 und der gegen die Tonwelle 37 drückenden Druckrolle 25 in der ersten Bandlaufrichtung (Play REV) transportiert. Bei dem Andrücken der Druckrolle 25 gegen die Tonwelle 37 wird der zweite Mittelstift 27 in der Nut 29 des zweiten Druckrollenhebels 21 verschoben und die Feder 31 gegenüber dem zweiten Druckrollenhebel 21 gespannt. Dadurch übt die zweite Druckrolle 25 unter Abstützung an der Tonwelle 37 mittels der Feder 31, des zweiten Druckrollenbügels 21 und des Nockens 34 des Druckrollenbügels 21, eine Kraft auf den Stellhebel 5 aus, welcher wiederum eine Kraft auf das Trägerelement 2 ausübt. Die erste Druckrolle 24 und der erste Druckrollenbügel 20 üben in der Spielstellung Play REV keine Kraft auf den Stellhebel 5 und damit auch keine Kraft auf das Trägerelement 2 aus.

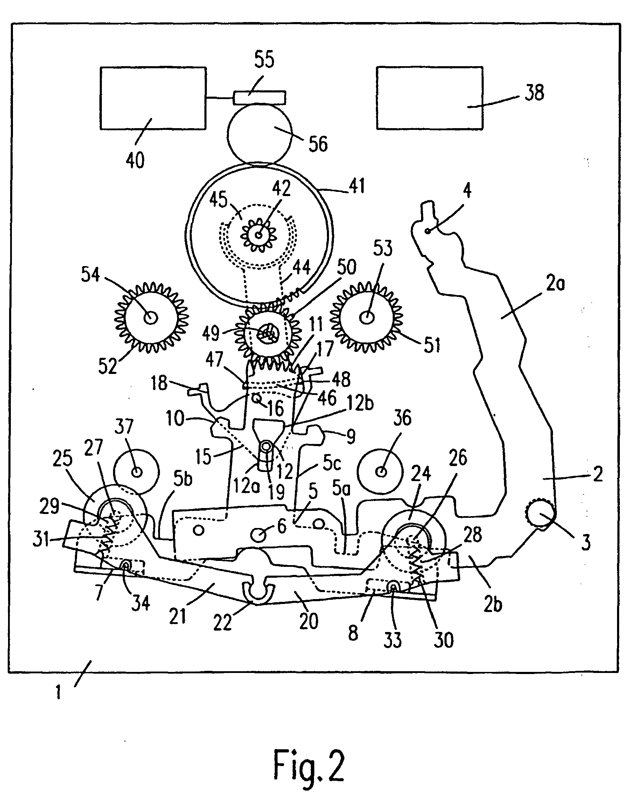

Nachfolgend wird das Umschalten von der ersten Bandlaufrichtung (Play REV) in die entgegengesetzte Bandlaufrichtung (Play NOR) näher erläutert. Ausgehend von der in Fig. 1 dargestellten ersten Bandlaufrichtung (Play REV) wird das Trägerelement durch Einwirkung der nicht dargestellten Steuerscheibe auf den Führungsstift 4 des Trägerelementes 2 im Gegenuhrzeigersinn gedreht, und zwar so weit, daß die Ansätze 9 und 10 des Stellhebels 5 nicht mehr gegen die Chassisanschläge 57 und 58 drücken, wodurch die Position des Stellhebels 5 nicht mehr von den Chassisanschlägen 57 und 58 bestimmt wird. Der weitere Umschaltvorgang wird nun von dem Servomotor 40 eingeleitet. Der Servomotor 40 reversiert, d.h. er ändert seine Drehrichtung und treibt über die Schneckenwelle 55 und das Untersetzungszahnrad 56 das Zwischenrad 41 derart an, daß dieses sich im Gegenuhrzeigersinn dreht. Das sich im Gegenuhrzeigersinn drehende Zwischenrad 41 übt mittels der Reibkupplung 45 auf den Schwenkhebel 44 eine Kraft im Gegenuhrzeigersinn aus, infolge derer sich der Schwenkhebel 44 im Gegenuhrzeigersinn auf die Verzahnung 11 des Stellhebels 5 zubewegt. Mit einem weiteren Verschwenken des Schwenkhebels 44 kommt die Verzahnung des Schwenkrades 50 mit der Verzahnung 11 des Stellhebels 5 in Eingriff. Der Schwenkhebel 44 bewegt sich zunächst infolge des Reibmomentes, welches die Reibkupplung 45 aufbringt, weiter im Gegenuhrzeigersinn, bis er mit seiner seitlichen Kante 48 gegen den Ansatz 17 des Ankerhebels 15 stößt. Diese Position ist in Fig. 2 dargestellt.

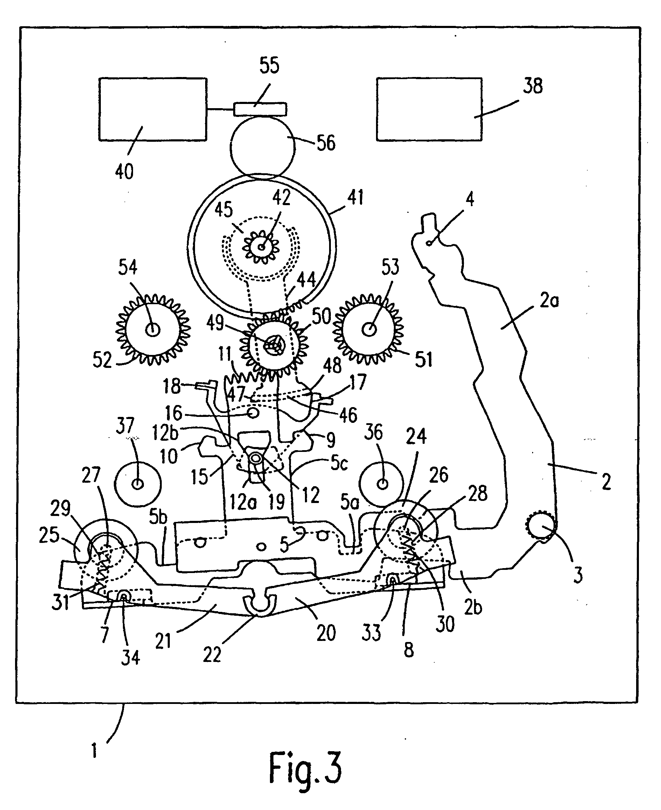

Durch das Anstoßen der seitlichen Kante 48 gegen den Ansatz 17 des Ankerhebels 15 wird die freie Schwenkbewegung des Schwenkhebels 44 infolge des Reibmomentes, welches mittels des Zwischenrades 41 und der Reibkupplung 45 auf den Schwenkhebel 44 ausgeübt wird, gestoppt. Da der Schwenkhebel 44 sich nachfolgend in einem mittleren Schwenkbereich an dem Ankerhebel 15 abstützen kann, können die Drehkräfte des Zwischenrades 41 direkt mittels Verzahnungskräften von der Verzahnung des Zwischenrades 41 auf die Verzahnung des Schwenkrades 50 und von der Verzahnung des Schwenkrades 50 auf die Stellhebelverzahnung 11 des Stellhebels 5 übertragen werden. Der Stellhebel 5 wird somit mittels der Verzahnungskräfte, welche deutlich größer sind als die mittels der Reibkupplung übertragbaren Kräfte, im Gegenuhrzeigersinn verschwenkt. Der verschwenkende Stellhebel 5 wirkt mit seiner Stellhebelnut 12 auf den Ankerhebelzapfen 19 ein, wodurch sich der Ankerhebel 15 um seine Drehachse 16 im Uhrzeigersinn dreht. Infolge der Verzahnungskräfte zwischen dem Schwenkrad 50 und der Verzahnung 11 des Stellhebels 5 folgt der Schwenkhebel 44 mit seiner seitlichen Kante 48 dem Ansatz 17 des Ankerhebels 15 so lange, bis der Ansatz 17 des Ankerhebels 15 die seitliche Kante 48 des Schwenkhebels 44 freigibt. Diese Position von Stellhebel 5, Ankerhebel 15 und Schwenkhebel 44 ist in Fig. 3 dargestellt.

Sobald der Ansatz 17 des Ankerhebels 15 die seitliche Kante 48 des Schwenkhebels 44 freigibt, kann sich der Schwenkhebel 44 nicht mehr an dem Ankerhebel 15 abstützen, und daher kann die Drehkraft des Zwischenrades 41 nicht mehr mittels Verzahnungskräften auf die Verzahnung 11 des Stellhebels 5 übertragen werden. Der Schwenkhebel 44 verschwenkt daher in einem nachfolgenden Endbereich des Verschwenkens nur noch infolge des mittels der Reibkupplung 45 aufgebrachten Reibmomentes. Mit dem weiteren Verschwenken des Schwenkhebels 44 geht die Verzahnung des Schwenkrades 50 außer Eingriff mit der Stellhebelverzahnung 11 des Stellhebels 5, und der Schwenkhebel 44 mit dem Schwenkrad 50 schwenkt infolge des Reibmomentes, welches die Reibkupplung 45 aufbringt, im Gegenuhrzeigersinn in die Verzahnung des Wickelrades 51. Die Verzahnungskräfte zwischen Wickelrad 51, Schwenkrad 50 und Zwischenrad 41 sind selbsteinziehend ausgeführt.

Nachfolgend wird das Trägerelement 2 im Uhrzeigersinn verschwenkt, indem die nicht dargestellte Steuerkontur der nicht dargestellten Steuerscheibe auf den am Ende des Schenkels 2a angeordneten Führungsstift 4 einwirkt. Mit dem Verschwenken des Trägerelementes 2 wird der an dem Trägerelement 2 um die Drehachse 6 drehbar angelagerte Stellhebel 5 in Richtung auf die Wickelräder 53 und 54 bewegt. Dabei drückt der rechte Ansatz 9 des Stellhebels 5 gegen die linke Kante des Chassisanschlages 57 und gleitet an dieser entlang. Ist das Trägerelement 2 bis in die Spielposition für die zweite Bandlaufrichtung (Play NOR) verschwenkt, so nimmt auch der Stellhebel 5 die Betriebsposition Play NOR ein, welche durch die Position des Trägerelementes 2 und durch die Chassisanschläge 57 und 58 bestimmt ist. Mit dem Überführen des Stellhebels 5 von der Stellung Play REV in die Stellung Play NOR sind gleichzeitig die Druckrollenhebel 20 und 21 mittels der in den Langlöchern 7 und 8 des Stellhebels 5 geführten Nocken 33 und 34 der Druckrollenhebel 20 und 21 von der Betriebsposition für die erste Bandlaufrichtung (Play REV) in die Betriebsposition für die zweite Bandlaufrichtung (Play NOR) überführt worden. Dadurch drückt die rechte Druckrolle 24 gegen die rechte Tonwelle 36, und das Magnetband wird in NOR-Richtung transportiert. Bei dem Andrücken der Druckrolle 24 gegen die Tonwelle 36 wird der erste Mittelstift 26 in der Nut 28 des ersten Druckrollenhebels 20 verschoben und die Feder 30 gegenüber dem ersten Druckrollenhebel 20 gespannt. Dadurch übt die erste Druckrolle 24 unter Abstützung an der Tonwelle 36 mittels der Feder 30, des ersten Druckrollenbügels 20 und des Nockens 33 des Druckrollenbügels 20, eine Kraft auf den Stellhebel 5 aus, welcher wiederum eine Kraft auf das Trägerelement 2 ausübt. Die zweite Druckrolle 25 und der zweite Druckrollenbügel 21 üben in der Spielstellung Play NOR keine Kraft auf den Stellhebel 5 und damit auch keine Kraft auf das Trägerelement 2 aus. Somit übt nur die erste Andruckrolle 24, welche zum Transport des Magnetbandes in der Betriebsstellung Play NOR gegen die Tonwelle 36 gedrückt werden muß, unter Abstützung an dieser Tonwelle 36 eine Kraft auf Stellhebel 5 und Trägerelement 2 aus. Die zweite Druckrolle 25, die in der Betriebsstellung Play NOR keine eigentliche Funktion hat, pendelt dagegen "frei" und übt keine Kraft auf Stellhebel 5 und Trägerelement 2 aus.

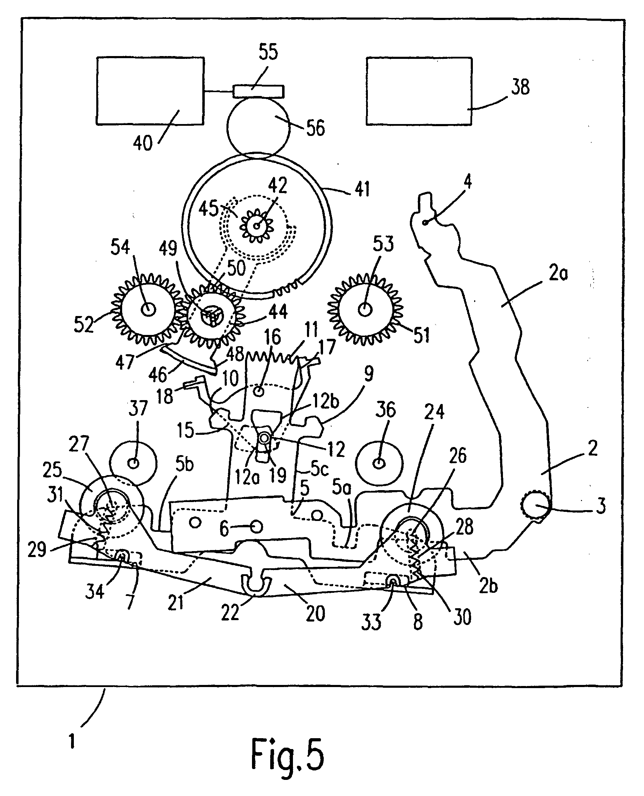

Fig. 5 zeigt eine Draufsicht auf Teile des Reverselaufwerkes in einer ersten Schnellspulstellung (Fast Reverse). Gegenüber der in der Figur 1 dargestellten Stellung ist das Trägerelement 2 um die Achse 3 im Gegenuhrzeigersinn verschwenkt. Das verschwenkende Trägerelement 2 nimmt bei dem Verschwenken den an dem Trägerelement 2 um die Drehachse 6 gelagerten Stellhebel 5 mit. Dieser Stellhebel 5 wirkt mit seinen Langlöchern 7 und 8 auf die Nocken 33 und 34 der Druckrollenhebel 20 und 21 ein. Dadurch wird die Druckrolle 25 von der Tonwelle 37 abgehoben und das nicht dargestellte Magnetband kann mittels der Wickelräder 53 und 54 an den Tonwellen 36 und 37 vorbeigeführt werden, ohne daß die Druckrollen 24 und 25 das nicht dargestellte Magnetband berühren.

Das Trägerelement 2 kann gegenüber der in Fig. 5 dargestellten Stellung weiter im Gegenuhrzeigersinn in eine Bereitschaftsstellung (Stand-By) verschwenkt werden, in der das Magnetband nicht transportiert wird. In dieser Stand By-Stellung ist der Stellhebel 5 aus dem Schwenkbereich des Schwenkhebels 44 herausbewegt. In diesem Stand-By-Betrieb ist das Schwenkrad 50 mit keinem der Wickelräder 53 und 54 in Eingriff. Da der Stellhebel 5 mit seiner Stellhebelverzahnung 11 jedoch völlig aus dem Schwenkbereich des Schwenkhebels 44 herausbewegt worden ist, besteht im Stand-By-Betrieb keine Gefahr, daß das Schwenkrad 50 mit der Stellhebelverzahnung 11 des Stellhebels 5 in Eingriff kommt und so unerwünschte Schaltvorgänge bewirkt.

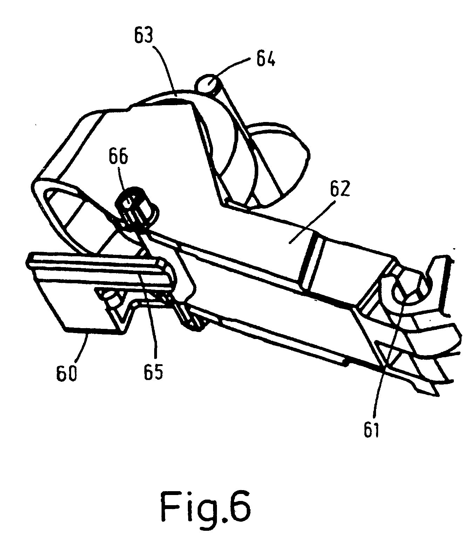

Fig. 6 zeigt in perspektivischer Ansicht einen Stellhebel 60 zusammen mit einem um eine Drehachse 61 gelagerten Druckrollenhebel 62, an dem eine Druckrolle 63 angeordnet ist, welche gegen eine Tonwelle 64 drückt. Der Stellhebel 60 weist eine Anschlagfläche 65 auf, die zentrisch in Höhe der Druckrolle 63 gegen einen an dem Druckrollenhebel 62 als Anschlagelement angeordneten Stift 66 drückt. Dadurch wird vermieden, daß die von der Druckrolle 63 auf den Druckrollenhebel 62 ausgehenden Kräfte zu einem Verkippen senkrecht zur Drehachse 61 des Druckrollenhebels 62 führen.

## Patentansprüche

1. Umschaltvorrichtung an einem Reverselaufwerk für ein Magnetbandkassettengerät,
wobei eine erste, an einem ersten Druckrollenhebel (20) gelagerte Druckrolle (24) für eine erste Bandlaufrichtung in einer ersten Betriebsposition der Umschaltvorrichtung gegen eine erste Tonwelle (36) und eine zweite, an einem zweiten Druckrollenhebel (21) gelagerte Druckrolle (25) für eine zweite Bandlaufrichtung in einer zweiten Betriebsposition der Umschaltvorrichtung gegen eine zweite Tonwelle (37) drückbar ist,
wobei der erste und der zweite Druckrollenhebel (20, 21) um eine gemeinsame Drehachse (22) oder jeweils um eine Drehachse drehbar an einer Chassisplatte (1) gelagert sind,
wobei ein Magnetkopf auf einem an einer Chassisplatte (1) gelagertem Trägerelement (2) anordbar ist und durch Bewegung des Trägerelementes (2) in verschiedene Positionen bezüglich einer Durchzugsbahn eines Magnetbandes bewegbar ist,
wobei ein auf dem Trägerelement (2) drehbar und/oder verschiebbar gelagerter Stellhebel (5) vorgesehen ist, der mit dem ersten (20) und dem zweiten (21) Druckrollenhebel gekoppelt ist,
wobei der Stellhebel (5) beim Umschalten der Bandlaufrichtung von der einen Betriebsposition in die andere Betriebsposition überführt wird,
wobei die Druckrollenhebel (20, 21) beim Umschalten der Bandlaufrichtung mittels des Stellhebels (5) von der einen Betriebsposition in die andere Betriebsposition überführt werden,
wobei in der ersten und der zweiten Bandlaufrichtung die Position beider Druckrollenhebel (20, 21) von der Position des Stellhebels (5) bestimmt ist.

2. Umschaltvorrichtung nach Anspruch 1, **dadurch gekennzeichnet,**
**daß** die Druckrollen (24, 25) jeweils in einer Nut (28, 29) der Druckrollenhebel (20, 21) verschiebbar gelagert sind und daß die Druckrollen (24, 25) und die Druckrollenhebel (20, 21) jeweils mittels einer Feder (30, 31) gegeneinander verspannt sind.

3. Umschaltvorrichtung nach Anspruch 1 oder 2, **dadurch gekennzeichnet,**
**dass** die jeweiligen Drehachsen der Druckrollenhebel (20 und 21) zwischen denjenigen Senkrechten angeordnet sind, die sich von der ersten (36) und der zweiten (37) Tonwelle senkrecht zu der Verbindungslinie der Lagerpunkte der Tonwellen (36, 37) erstrecken.

4. Umschaltvorrichtung nach Anspruch 1 oder 2, **dadurch gekennzeichnet,**
**dass** die gemeinsame Drehachse (22) der jeweiligen Druckrollenhebel (20 und 21) im wesentlichen auf der Mittelsenkrechten der Verbindungslinie der ersten (36) und der zweiten (37) Tonwelle angeordnet ist.

5. Umschaltvorrichtung nach einem der Ansprüche 1 bis 4, **dadurch gekennzeichnet, daß** an dem ersten (20) und zweiten (21) Druckrollenhebel je ein Führungselement (33, 34) angeordnet ist, das in je eine Führungsöffnung (7, 8) des Stellhebels (5) eingreift.

6. Umschaltvorrichtung nach Anspruch 5, **dadurch gekennzeichnet,**
**daß** die Führungselemente (33, 34) als Nocken (33, 34) und die Führungsöffnungen (7, 8) als Langlöcher (7, 8) ausgebildet sind.

7. Umschaltvorrichtung nach einem der Ansprüche 1 bis 4, **dadurch gekennzeichnet,**
**daß** an dem Stellhebel (5, 60) Anschlagflächen (65) vorgesehen sind, die beim Umschalten der Bandlaufrichtung zentrisch in Höhe der Druckrollen (24, 25, 63) gegen an den Druckrollenhebeln (20, 21, 62) angeordnete Andruckelemente (66) drückbar sind.

8. Umschaltvorrichtung nach einem der Ansprüche 1 bis 7, **dadurch gekennzeichnet, daß** der Stellhebel (5) drehbar auf dem Trägerelement (2) gelagert ist.

9. Umschaltvorrichtung nach einem der Ansprüche 1 bis 8, **dadurch gekennzeichnet, daß** die Position des Stellhebels (5) in der ersten und der zweiten Betriebsposition des Umschaltmechanismus durch an der Chassisplatte (1) angeordnete Referenzelemente (57, 58) bestimmt ist.

10. Umschaltvorrichtung nach einem der Ansprüche 1 bis 9, **dadurch gekennzeichnet, daß** das Trägerelement (2) und damit der an diesem angelagerte Stellhebel (5) beim Umschalten der Bandlaufrichtung zunächst von der Durchzugsbahn des Magnetbandes wegbewegt werden, daß danach der Stellhebel (5) und die Druckrollenhebel (20, 21) verschwenkt werden und daß dann Trägerelement (2) und Stellhebel (5) auf die Durchzugsbahn des Magnetbandes zubewegt werden.

11. Umschaltvorrichtung nach einem der Ansprüche 1 bis 10, **dadurch gekennzeichnet, daß** die Umschaltvorrichtung ein zwischen zwei Wickelrädern (51, 52) in einem Schwenkbereich schwenkbares Getriebe aufweist, mittels dem in der ersten Betriebsposition ein erstes Wickelrad (51) und in der zweiten Betriebsposition ein zweites Wickelrad (52) antreibbar ist, daß der Stellhebel (5) eine Verzahnung (11) aufweist, die mit einem Schwenkrad (50) des schwenkbaren Getriebes in Eingriff bringbar ist, daß die Stellhebelverzahnung (11) und das Schwenkrad (50) in einem mittleren Bereich des Schwenkbereiches des Getriebes in Eingriff und in einem Anfangs- und einem Endbereich des Schwenkbereiches außer Eingriff sind, so daß das verschwenkende Getriebe mittels des Schwenkrades (50) nur in dem mittleren Bereich eine Kraft auf den Stellhebel (5) ausübt.

12. Umschaltvorrichtung nach Anspruch 11,
**dadurch gekennzeichnet,**
**daß** das Schwenkrad (50) an einem Schwenkhebel (44) angeordnet ist, der mittels einer von einer Reibkupplung (45) übertragbaren Reibkraft mit einem mit dem Schwenkrad (50) kämmenden Zwischenrad (41) gekoppelt ist,
**daß** der Schwenkhebel (44) in dem Anfangs- und Endbereich des Schwenkbereiches mittels der von der Reibkupplung (45) übertragenen Reibkraft verschwenkt wird,
**daß** ein drehbar gelagerter Ankerhebel (15) vorgesehen ist, dessen Drehbewegung von der Bewegung des Stellhebels (5) gesteuert wird, daß der verschwenkende Schwenkhebel (44) in dem mittleren Bereich des Schwenkbereiches gegen eine Anschlagkante (17, 18) des Ankerhebels (15) drückt, so daß nachfolgend infolge der Abstützung des Schwenkhebels (44) an der Anschlagkante (17, 18) des Ankerhebels (15) Verzahnungskräfte mittels Zwischenrad (41) und Schwenkrad (50) auf die Verzahnung (11) des Stellhebels (5) übertragen werden, so daß dieser gedreht wird.

13. Umschaltvorrichtung nach Anspruch 12, **dadurch gekennzeichnet,**
**daß** der Ankerhebel (15) drehbar an der Chassisplatte (1) gelagert ist.

14. Umschaltvorrichtung nach Anspruch 12 oder 13, **dadurch gekennzeichnet,**
**daß** der Ankerhebel (15) ein Leitelement (19) aufweist, das in eine Leitöffnung (12) des Stellhebels (5) eingreift oder daß der der Stellhebel ein Leitelement aufweist, das in eine Leitöffnung des Ankerhebels (15) eingreift.

15. Umschaltvorrichtung nach Anspruch 14, **dadurch gekennzeichnet, daß** die Leitöffnung (12) des Stellhebels (5) als Langloch (12) mit zwei verschieden breiten Bereichen ausgebildet ist, wobei in einem ersten, schmalen Bereich (12a) die Breite des Langloches (12) im wesentlichen der Breite des Leitelementes (19) entspricht und in einem zweiten, breiten Bereich (12b) die Breite des Langloches (12) größer als die Breite des Leitelementes (19) ist.

16. Laufwerk mit einer Umschaltvorrichtung nach einem der Ansprüche 1 bis 15.

17. Magnetbandkassettengerät mit einem Laufwerk mit einer Umschaltvorrichtung nach einem der Ansprüche 1 bis 15.

## Claims

1. A switching device in an auto-reverse deck for a magnetic-tape-cassette apparatus, in which a first pressure roller (24) mounted on a first pressure-roller lever (20), for a first tape-transport direction, can be applied to a first capstan (36) in a first operating position of the switching device and a second pressure roller (25) mounted on a second pressure-roller lever (21), for a second tape-transport direction, can be applied to a second capstan (37) in a second operating position of the switching device, in which said first and said second pressure-roller lever (20, 21) are mounted on a deck plate (1) so as to be pivotable about a common pivot (22) or about separate pivots, in which a magnetic head is arrangeable on a carrier element (2) mounted on a deck plate (1) and is movable in different positions relative to a transport path of a magnetic tape by movement of the carrier element, in which an actuating lever (5), which is rotatably and/or translatably mounted on the carrier element (2), is coupled to the first (20) and the second (21) pressure-roller lever, in which the actuating lever (5) is set from one operating position to the other operating position when the tape-transport direction is changed, the pressure-roller levers (20, 21) are moved from one operating position into the other operating position when the tape-transport direction is changed by means of the actuating lever (5), the position of the two pressure-roller levers (20, 21) being determined by the position of the actuating lever (5) in the first and in the second tape-transport direction.

2. A switching device as claimed in claim 1, **characterized in that** the pressure rollers (24, 25) are each movable in a slot (28, 29) in the pressure-roller lever (20, 21), and the pressure rollers (24, 25) and the pressure-roller levers (20, 21) are restrained relative to one another by means of a spring (30, 31).

3. A switching device as claimed in claim 1 or 2, **characterized in that** the pivots associated with the pressure-roller levers (20 and 21) are disposed between normals which extend from the first (36) and the second (37) capstan perpendicularly to a line interconnecting the bearing points of the capstans (36, 37).

4. A switching device as claimed in claim 1 or 2, **characterized in that** the common pivot (22) of the pressure-roller levers (20 and 21) are disposed substantially on the mid-perpendicular to the line interconnecting the first (36) and the second (37) capstan.

5. A switching device as claimed in any one of the claims 1 to 4, **characterized in that** the first (20) and the second (21) pressure-roller lever each comprises a guide element (33, 34) which engages in a guide opening (7, 8) in the actuating lever (5).

6. A switching device as claimed in claim 5, **characterized in that** the guide elements (33, 34) are projections (33, 34) and the guide openings (7, 8) are slots (7, 8).

7. A switching device as claimed in any one of the claims 1 to 4, **characterized in that** the actuating lever (5, 60) has stop surfaces (65) which, centered in the height direction of the pressure rollers (24, 25, 63), are engageable against stop elements (66) mounted on the pressure-roller levers (20, 21, 62) upon a reversal of the tape-transport direction.

8. A switching device as claimed in any one of the claims 1 to 7, **characterized in that** the actuating lever (5) is pivotably mounted on the carrier element (2).

9. A switching device as claimed in any one of the claims 1 to 8, **characterized in that** the position of the actuating lever (5) in the first and the second operating position of the switching device is defined by reference elements (57, 58) arranged on the deck plate (1).

10. A switching device as claimed in any one of the claims 1 to 9, **characterized in that** upon a reversal of the tape-transport direction the carrier element (2) and, consequently, the actuating lever (5) mounted on this carrier element are initially moved away from the transport path of the magnetic tape, subsequently the actuating lever (5) and the pressure-roller levers (20, 21) are pivoted, and then the carrier element (2) and the actuating lever (5) are moved towards the transport path of the magnetic tape.

11. A switching device as claimed in any one of the claims 1 to 10, **characterized in that** the switching device comprises a drive mechanism which is pivotable in a pivoting range between two reel-disc wheels (51, 52), by means of which drive mechanism a first reel-disc wheel (51) is drivable in the first operating position and a second reel-disc wheel (52) is drivable in the second operating position, the actuating lever (5) has teeth (11) which are engageable with a pivotal wheel (50) of the pivotable drive mechanism, the actuating-lever teeth (11) and the pivotal wheel (50) being in mesh in a central part of the pivoting range and being not in mesh in an initial part and a final part of the pivoting range, as a result of which the pivoting drive mechanism exerts a force on the actuating lever (5) by means of the pivotal wheel (5) only in the central part of the pivoting range.

12. A switching device as claimed in claim 11, **characterized in that** the pivotal wheel (50) is mounted on a pivotal lever (44), which is coupled to an intermediate wheel (41) by means of a frictional force which can be transmitted by a friction coupling (45), which intermediate wheel meshes with the pivotal wheel (50), the pivotal lever (44) is pivoted in the initial and the final part of the pivoting range by the frictional force transmitted by the friction coupling (45), a pivotably supported armature lever (15) has been provided whose pivotal movement is controlled by the movement of the actuating lever (5), the pivoting pivotal lever (44) engages against a stop edge (17, 18) of the armature lever (15) in the central part of the pivoting range, so that subsequently, owing to the engagement of the pivotal lever (44) against the stop edge (17, 18) of the armature lever (15), meshing forces are transmitted to the teeth (11) of the actuating lever (5) by means of the intermediate wheel (41) and the pivotal wheel (50), as a result of which said actuating lever is pivoted.

13. A switching device as claimed in claim 12, **characterized in that** the armature lever (15) is pivotably supported on the deck plate (1).

14. A switching device as claimed in claim 12 or 13, **characterized in that** the armature lever (15) has a guide element (19) which engages a guide opening (12) in the actuating lever (5), or the actuating lever has a guide element which engages a guide opening in the armature lever (15).

15. A switching device as claimed in claim 14, **characterized in that** the guide opening (12) in the actuating lever (5) is a slot (12) having two parts of different width, the width of the slot (12) in a narrow first part (12a) corresponding substantially to the width of the guide element (19) and the width of the slot (12) in a broad second part (12b) being larger than the width of the guide element (19).

16. A tape deck including a switching device as claimed in any one of the claims 1 to 15.

17. A magnetic-tape-cassette apparatus including a deck which includes a switching device as claimed in any one of the claims 1 to 15.

## Revendications

1. Dispositif de commutation sur un mécanisme d'entraînement réversible pour un magnétophone à cassette, un premier galet presseur (24) logé contre un premier levier de galet presseur (20) pouvant être pressé pour un premier sens d'avance de la bande dans une première position de fonctionnement du dispositif de commutation contre un premier cabestan (36) et un deuxième galet presseur (25) logé contre un deuxième levier de galet presseur (21) pour un deuxième sens d'avance de la bande dans une deuxième position de fonctionnement du dispositif de fonctionnement contre un deuxième cabestan (37), les premier et deuxième leviers de galet presseur (20, 21) étant logés sur une plaque de châssis (1) à rotation autour d'un axe de rotation commun (22) ou autour d'un axe de rotation respectif, une tête magnétique pouvant être disposée sur un élément porteur (2) logé sur une plaque de châssis (1) et pouvant être déplacée par le mouvement de l'élément porteur (2) dans différentes positions par rapport à une voie de passage d'une bande magnétique, un levier de réglage (5) logé à rotation et/ou à déplacement sur l'élément porteur (2) étant prévu et couplé aux premier (20) et deuxième (21) leviers de galet presseur,
le levier de réglage (5) étant amené lors de la commutation du sens d'avance de la bande d'une position de fonctionnement dans l'autre,
le levier de galet presseur (20, 21) étant amené d'une position de fonctionnement dans l'autre lors de la commutation du sens d'avance de la bande à l'aide du levier de réglage (5),la position des deux leviers de galets presseur (20, 21) étant déterminée par la position du levier de réglage (5) dans les premier et deuxième sens d'avance de la bande.

2. Dispositif de commutation selon la revendication 1, **caractérisé en ce que** les galets presseurs (24, 25) sont respectivement logés à déplacement dans une rainure (28, 29) des leviers de galet presseur (20,21) et que les galets presseurs (24,25) et les leviers de galet presseur (20, 21) sont respectivement tendus l'un contre l'autre à l'aide d'un ressort (30, 31).

3. Dispositif de commutation selon l'une des revendications 1 ou 2, **caractérisé en ce que** les axes de rotation respectifs des leviers de galet presseur (20 et 21) sont disposés entre les perpendiculaires qui s'étendent des premier (36) et deuxième (37) cabestans perpendiculaires à la ligne de jonction des points d'appui des cabestans (36, 37).

4. Dispositif de commutation selon l'une des revendications 1 ou 2, **caractérisé en ce que** l'axe de rotation commun (22) des leviers respectifs de galet presseur (20 et 21) est disposé essentiellement sur la perpendiculaire centrale de la ligne de jonction des premier (36) et deuxième (37) cabestans.

5. Dispositif de commutation selon l'une des revendications 1 à 4, **caractérisé en ce qu'**un élément de guidage (33, 34) qui entre en prise dans une ouverture de guidage (7, 8) respective du levier de réglage (5) est respectivement disposé sur les premier (20) et deuxième (21) leviers de galet presseur.

6. Dispositif de commutation selon la revendication 5, **caractérisé en ce que** les éléments de guidage (33, 34) sont conçus comme des cames (33, 34) et les ouvertures de guidage (7, 8) comme des orifices longitudinaux (7, 8).

7. Dispositif de commutation selon l'une des revendications 1 à 4, **caractérisé en ce qu'**il est prévu sur le levier de réglage (5, 60) des surfaces de butée (65) qui, lors de la commutation du sens d'avance de la bande, peuvent être pressées centralement à hauteur des galets presseurs (24, 25, 63) contre les éléments de pression (66) disposés contre les leviers de galet presseur (20, 21, 62).

8. Dispositif de commutation selon l'une des revendications 1 à 7, **caractérisé en ce que** le levier de réglage (5) est logé à rotation sur l'élément porteur (2).

9. Dispositif de commutation selon l'une des revendications 1 à 8, **caractérisé en ce que** la position du levier de réglage (5) est déterminée dans les première et deuxième positions de fonctionnement du mécanisme de commutation par des éléments de référence (57, 58) disposés sur la plaque de châssis (1).

10. Dispositif de commutation selon l'une des revendications 1 à 9, **caractérisé en ce que** l'élément porteur (2) et, dès lors, le levier de réglage (5) logé sur celui-ci sont d'abord écartés de la voie de passage de la bande magnétique lors de la commutation du sens d'avance de la bande, que le levier de réglage (5) et le levier de galet presseur (20, 21) sont ensuite pivotés et que l'élément porteur (2) et le levier de réglage (5) sont ensuite amenés sur la voie de passage de la bande magnétique.

11. Dispositif de commutation selon l'une des revendications 1 à 10, **caractérisé en ce que** le dispositif de commutation présente une transmission pivotant entre deux roues de bobinage (51, 52) dans une plage de pivotement à l'aide de laquelle une première roue de bobinage (51) dans la première position de fonctionnement et une deuxième roue de bobine (52) dans la deuxième position de fonctionnement peuvent être entraînées, que le levier de réglage (5) présente une denture (11) qui peut entrer en prise avec une roue pivotante (50) de la transmission pivotante, que la denture du levier de réglage (11) et la roue pivotante (50) sont en prise dans une zone centrale de la plage de pivotement de la transmission et hors de prise dans les zones de début et de fin de la plage de pivotement de telle sorte que la transmission pivotante n'exerce à l'aide de la roue pivotante (50) une force sur le levier de réglage (5) que dans la zone centrale.

12. Dispositif de commutation selon 1a revendication 11,
**caractérisé en ce que** la roue pivotante (50) est disposée sur un levier pivotant (44) qui est couplé à l'aide d'une force de friction transmissible par un accouplement à friction (45) avec une roue intermédiaire (41) entrant en prise avec la roue pivotante (50),
que le levier pivotant (44) est pivoté dans les zones de début et de fin de la plage de pivotement à l'aide de la force de friction transmise par l'accouplement à friction (45),
qu'il est prévu un levier d'ancrage (15) logé à rotation dont le mouvement rotatif est commandé par le mouvement du levier de réglage (5),
que le levier pivotant (44) en cours de pivotement presse dans la zone centrale de la plage de pivotement contre un bord de butée (17, 18) du levier d'ancrage (15) de telle sorte que des forces d'engrènement soient ensuite transmises à l'aide de la roue intermédiaire (41) et de la roue pivotante (50) sur la denture (11) du levier de réglage (5) en raison de l'appui du levier pivotant (44) sur le bord de butée (17, 18) du levier d'ancrage (15) de telle sorte que le levier de réglage soit tourné.

13. Dispositif de commutation selon la revendication 12, **caractérisé en ce que** le levier d'ancrage (15) est logé à rotation sur la plaque de châssis (1).

14. Dispositif de commutation selon l'une des revendications 12 ou 13, **caractérisé en ce que** le levier d'ancrage (15) présente un élément conducteur (19) qui entre en prise dans un orifice conducteur (12) du levier de réglage (5) ou que le levier de réglage présente un élément conducteur qui entre en prise dans un orifice conducteur du levier d'ancrage (15).

15. Dispositif de commutation selon la revendication 14, **caractérisé en ce que** l'orifice conducteur (12) du levier de réglage (5) est conçu comme un orifice longitudinal avec deux zones de largeur différente, la largeur de l'orifice longitudinal (12) correspondant essentiellement à la largeur de l'élément conducteur (19) dans une première zone étroite (12a) et la large de l'orifice longitudinal (12) étant supérieure à la largeur de l'élément conducteur (19) dans une deuxième zone plus large (12b).

16. Mécanisme d'entraînement avec un dispositif de commutation selon l'une des revendications 1 à 15.

17. Magnétophone à cassette avec un mécanisme d'entraînement doté d'un dispositif de commutation selon l'une des revendications 1 à 15.
